# EUROPÄISCHE PATENTSCHRIFT

(11) **EP 0 991 458 B1**
(45) Veröffentlichungstag und Bekanntmachung des Hinweises auf die Patenterteilung: **03.09.2003**
(21) Anmeldenummer: 98937545.6
(22) Anmeldetag: 25.06.1998
(51) Int. Cl.: B01D 46/00, B01D 46/52, F02M 35/024, B01D 46/24

(54) **LUFTFILTER**
AIR FILTER
FILTRE A AIR

(30) Priorität: 26.06.1997 DE 19727175
(43) Veröffentlichungstag der Anmeldung: 12.04.2000
(73) Patentinhaber: FILTERWERK MANN + HUMMEL GmbH, 71631 Ludwigsburg (DE)
(72) Erfinder: MÜLLER, Heinz, D-71686 Remseck (DE)
(74) Vertreter: Voth, Gerhard, Dipl.-Ing.
(86) Internationale Anmeldenummer: EP9803884
(87) Internationale Veröffentlichungsnummer: WO99000173

(56) Entgegenhaltungen:
- EP-A- 0 411 240
- EP-A- 0 514 335
- EP-A- 0 523 001
- DE-A- 1 719 212
- DE-A- 2 223 979
- DE-A- 3 606 079
- DE-U- 1 859 307
- GB-A- 2 197 802

## Beschreibung

### Stand der Technik

Die Erfindung betrifft einen Luftfilter mit einem Vorfilterelement nach dem Oberbegriff des Hauptanspruchs.

Es ist beispielsweise aus der GB 2 197 802 A bekannt, dass bei einer Filterpatrone eines Luftfilters seitlich ein Vorfilterelement aus einem Polyurethan-Schaumstoff in Strömungsrichtung vorgeschaltet ist. Dieser Schaumstoff dient in erster Linie als Diffusor für die einströmende Luft und weist darüber hinaus auch noch eine Filterwirkung zur Schonung des Hauptfilterelements auf. Zwar ist hier vorgesehen, dass das Vorfilterelement von Zeit zu Zeit gereinigt wird, jedoch ist nicht auszuschließen, dass sich verdichtete Partikel im Vorfilterelement lösen und somit das Hauptfilterelement beeinträchtigen.

Es ist darüber hinaus beispielsweise aus der DE-AS 22 23 979 bekannt, dass ein Hauptfilterelement auf der Oberfläche mit einem dauerhaften verbleibenden Haftmittel versehen sein kann.

Die GB 2 197 802 beschreibt einen Luftfilter für eine Brennkraftmaschine, welche als Vorabscheider einen Polyurethanschaum und als weiteres Abscheideelement ein gefaltetes Filterpapier aufweist. Der Vorabscheider soll dabei die Lebensdauer des Filters erhöhen.

Es ist ferner aus der DE-A-2 223 979 ein Staubabscheider mit einem Filterelement bekannt, dessen Oberflächen mit das Haften fördernden Mitteln beschichtet sind. Dieser Staubabscheider weist eine Aufgabeeinrichtung zum fortlaufenden Aufgeben des das Haften fördernden Mittels auf die Filteroberfläche auf.

### Aufgabenstellung

Der Erfindung liegt die Aufgabe zugrunde, einen Luftfilter der eingangs angegebenen Art so fortzubilden, dass auf einfache Weise die Filterwirkung eines 2-Stufen-Filters verbessert wird.

### Vorteile der Erfindung

Der erfindungsgemäße Luftfilter weist in vorteilhafter Weise eine auf einem faserartigen Trägermaterial relativ dünne Schicht eines Haft- oder Klebemittels auf, wobei dieses Vorfilterelement für einen vorgegebenen Filterzyklus eine andauernd adhäsive Wirkung für auszufilternde Partikel, insbesondere Staub, aufweist. Die dünne Schicht des Haft- oder Klebemittels kann beispielsweise durch Tauchen oder Aufsprühen aufgetragen werden und weist nur solch eine Dicke auf, dass die Durchströmung der zu filternden Luft nicht behindert wird.

Dieses Vorfilterelement kann auf einfache Weise bei der Herstellung oder als Nachrüstung auf einer Filterpatrone separat mit einem vorgegebenen Abstand zum Hauptfilterelement angebracht werden. Das Vorfilterelement als separates Vorvlies ist mit der Haft- oder Klebeschicht dabei in vorteilhafter Weise so weich gestaltet, dass trotz einer großen Höhe der Patrone diese in einem vorhandenen Gehäuse auf jeden Fall eingesetzt werden kann. Hierbei kann das Vorfilterlement eine rauhe und eine feine Seite aufweisen.

Gemäß der Erfindung ist das Vorfilterelement mit der Haft- oder Klebeschicht separat vom Hauptfilterelement, bzw. von einer speziellen Halterung im Filtergehäuse entfernbar, damit nach einem vorgegebenen Zeitraum (Filterzykluss) die am Vorfilterelement anhaftenden Partikel mechanisch, bzw. durch Auswaschen entfernbar sind.

Ein weiterer Vorteil der Erfindung besteht darin, dass bei einem schlagartigen Wassereinfall in die Filteranordnung das eintretende Wasser durch das Vorfilterelement aufgefangen wird. Aufgrund der Durchströmungstiefe wird relativ viel Wasser davon abgehalten schlagartig auf das Haupt-Filterelement aufzutreffen. Wäre dies der Fall, würde durch ein kurzzeitiges Schließen vieler Poren der Durchflusswiderstand schlagartig ansteigen, was einen inneren Abstützmantel für das Hauptfilterelement, insbesondere bei hohen Bauformen, notwendig machen würde.

Bei einer bevorzugten Ausführungsform ist das Hauptfilterelement eine hohlzylindrische Filterpatrone mit kreisförmigem oder ovalem Querschnitt, die in ein entsprechendes Filtergehäuse, beispielsweise in einem Kraftfahrzeug, eingesetzt werden kann. Am Zylinderumfang der Filterpatrone befindet sich zumindest in Teilbereichen das Vorfilterelement, wobei zwischen dem Hauptfilterelement und dem Vorfilterelement ein Ringspalt angeordnet sein kann.

Für sich gesehen sind dauerhafte Klebefilme, insbesondere für die Entfernung von Fasern aus Kleidungsstücken, beispielsweise aus dem deutschen Gebrauchsmuster 1 859 307 bekannt. Hier wird eine Latexschicht aufgetragen, die mit Alignate als Verdickungsmittel vermischt ist.

Auch aus der DE-OS 1 719 212 ist ein Klebefilm für die Reinigung von Textilien bekannt, der aus einer hydrophoben Elastomerzusammensetzung besteht. Diese Elastomerzusammensetzung besteht aus einer Mischung von hochmolekularen Polyvinylchlorid und einem Polyester-Weichmacher, wobei diese Mischung eine Reinigung des Klebefilms mit Wasser und einer anschließend wieder vollen Gebrauchsfähigkeit ermöglicht.

Weitere chemische Verbindungen, die einen dauerhaften Einsatz als Klebefilm ermöglichen, sind der EP 0 514 335 A2 und der EP 0 523 001 A1 zu entnehmen. Hier wird in einem Fall ein Epoxiharz mit einem Amin oder einem Aminwasserstoff, einem Dithol und einem latenten Härter für das Epoxiharz sowie im anderen Fall ein Epoxiharz mit einem Amin oder einer Imidazolverbindung und eines Polycarbonsäureanhybrids als Klebefilm verwendet.

Andere vorteilhafte Ausführungsformen sind in den Unteransprüchen angegeben.

### Zeichnung

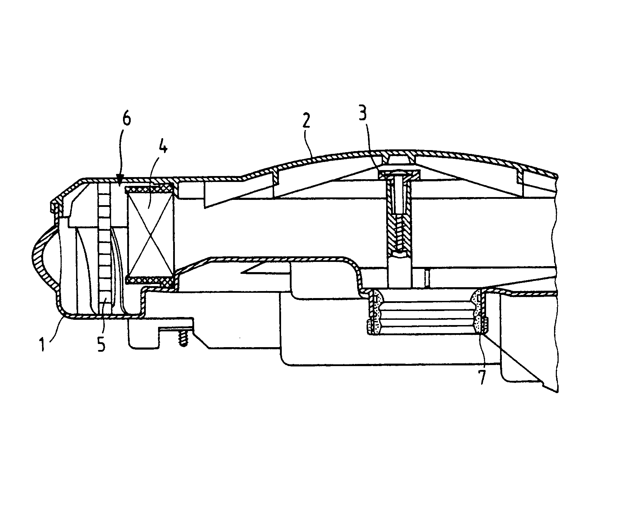

Ein Ausführungsbeispiel des erfindungsgemäßen Luftfilters wird anhand der Figur der Zeichnung erläutert, die einen Schnitt durch einen Teilbereich eines Luftfiltergehäuse für ein Kraftfahrzeug mit einem Vorfilterelement zeigt.

### Beschreibung des Ausführungsbeispiels

In der Figur sind im Schnitt Teile eines Luftfiltergehäuses mit einem Gehäuseunterteil 1 und einem Deckel 2 gezeigt, die über eine Schraube 3 zusammengehalten werden.

Zwischen dem Deckel 2 und dem Gehäuseunterteil 1 ist eine Filterpatrone 4 als Hauptfilterelement axial abgedichtet angeordnet. Am Umfang außen ist ein Vorfilterelement 5 mit einem Ringspalt 6 zum Hauptfilterelement 4 in das Gehäuse eingebracht. Die Strömung der zu filternden Luft führt dabei von außen durch das Vorfilterelement 5, durch den Ringspalt und das Hauptfilterelement 4 zu einem Reinluftausgang 7.

Bei dem Vorfilterelement 5 des Ausführungsbeispiels ist auf einem faserartigen Trägermaterial eine relativ dünne Schicht eines hier im Einzelnen nicht erkennbaren Klebemittels aufgetragen, wobei das Klebemittel für einen vorgegebenen Zeitraum eine andauernd adhäsive Wirkung für auszufilternde Partikel, insbesondere Staub, aufweist, die im Verlauf der Luftströmung hier haften bleiben.

Das Vorfilterelement 5 ist separat vom Hauptfilterelement 4 bzw. vom Gehäuse 1,2 des Luftfilters entfernbar, damit nach dem vorgegebenen Zeitraum die am Klebemittel anhaftenden Partikel mechanisch, bzw. durch Auswaschen entfernbar sind. Diese als Klebefilm aufgetragenen Klebemittel enthalten in vorteilhafter Weise die in der Beschreibungseinleitung aufgeführten chemischen Verbindungen, die ev. nach einer Reinigung wieder die gleiche adhesive Wirkung haben.

## Patentansprüche

1. Luftfilter
- mit einem in Strömungsrichtung vor einem Hauptfilterelement (4) angeordneten Vorfilterelement (5), **dadurch gekennzeichnet, dass**
- auf einem faserartigen Trägermaterial des Vorfilterelements (5) eine relativ dünne Schicht eines Haft- oder Klebemittels auf die Faserstruktur aufgetragen ist, wobei das Klebemittel für einen vorgegebenen Filterzyklus eine andauernd adhäsive Wirkung für auszufilternde Partikel, insbesondere Staub, aufweist,
- das Vorfilterelement (5) in einem Abstand um Hauptfilterelement (4) angeordnet ist und separat vom Gehäuse des Luftfilters entfernbar ist und
- nach dem vorgegebenen Filterzyklus die am Klebemittel anhaftenden Partikel mechanisch oder durch Auswaschen entfernbar sind.

2. Luftfilter nach Anspruch 1, **dadurch gekennzeichnet, dass**
- das Hauptfilterelement (4) eine hohlzylindrische Filterpatrone mit kreisförmigem oder ovalem Querschnitt ist, an deren Zylinderumfang zumindest in Teilbereichen sich das Vorfilterelement befindet.

3. Luftfilter nach Anspruch 2, **dadurch gekennzeichnet, dass**
- sich zwischen dem Hauptfilterelement (4) und dem Vorfilterelement (5) ein Ringspalt (6) befindet.

4. Luftfilter nach einem der vorhergehenden Ansprüche, **dadurch gekennzeichnet, dass**
- das Klebemittel Latex mit einem Verdickungsmittel enthält.

5. Luftfilter nach einem der vorhergehenden Ansprüche, **dadurch gekennzeichnet, dass**
- das Klebemittel eine Elastomerzusammensetzung aus hochmolekularem Polyvinylchlorid und einem Polyester-Weichmacher ist.

6. Luftfilter nach einem der vorhergehenden Ansprüche, **dadurch gekennzeichnet, dass**
- das Klebemittel eine Verbindung aus Epoxiharz mit einem Amin oder einem Aminwasserstoff, einem Dithol und einem latenten Härter ist.

7. Luftfilter nach einem der vorhergehenden Ansprüche, **dadurch gekennzeichnet, dass**
- das Klebemittel eine Verbindung aus Epoxiharz mit einem Amin oder einer Imidazolverbindung und eines Polycarbonsäureanhydrids ist.

## Claims

1. Air filter,
- having a preliminary filter element (5) disposed upstream of a main filter element (4) when viewed with respect to the direction of flow, **characterised in that**,
- on a fibrous carrier material of the preliminary filter element (5), a relatively thin layer of an adhesive or bonding agent is applied to the fibrous structure, the bonding agent having, for a prescribed filter cycle, a permanently adhesive effect for particles which are to be filtered, more especially dust,
- the preliminary filter element (5) is disposed around the main filter element (4) at a spacing therefrom and is separately removable from the housing of the air filter and,
- after the prescribed filter cycle, the particles adhering to the bonding agent are removable mechanically or by washing.

2. Air filter according to claim 1, **characterised in that**
- the main filter element (4) is a hollow-cylindrical filter cartridge with a circular or oval cross-section, the preliminary filter element being situated on the cylinder circumference of said cartridge at least in partial regions.

3. Air filter according to claim 2, **characterised in that**
- an annular gap (6) is situated between the main filter element (4) and the preliminary filter element (5).

4. Air filter according to one of the preceding claims, **characterised in that**
- the bonding agent contains latex with a thickening agent.

5. Air filter according to one of the preceding claims, **characterised in that**
- the bonding agent is an elastomeric composition formed from high-molecular polyvinyl chloride and a polyester plasticiser.

6. Air filter according to one of the preceding claims, **characterised in that**
- the bonding agent is a compound formed from epoxy resin with an amine or an amine hydride, a dithol and a latent hardener.

7. Air filter according to one of the preceding claims, **characterised in that**
- the bonding agent is a compound formed from epoxy resin with an amine or an imidazole compound and a polycarboxylic acid anhydride.

## Revendications

1. Filtre à air comportant un élément de filtre amont (5) installé en amont d'un l'élément de filtre principal (4) dans le sens de l'écoulement,
**caractérisé en ce qu'**
- une matière de support fibreuse de l'élément de filtre amont (5) porte une couche relativement mince d'un agent d'accrochage ou agent adhésif sur la structure de fibres, l'agent adhésif ayant un effet d'adhérence permanent pour des particules à séparer notamment la poussière, pour un cycle de filtrage prédéterminé,
- l'élément de filtre amont (5) peut être installé à une certaine distance de l'élément de filtre principal (4) et s'enlève séparément du boîtier du filtre à air, et
- après le cycle de filtrage prédéterminé, les particules accrochées à l'élément adhésif sont enlevées mécaniquement ou par lavage.

2. Filtre à air selon la revendication 1,
**caractérisé en ce que**
l'élément de filtre principal (4) est une cartouche de filtre cylindrique, creuse, à section circulaire ou ovale dont la périphérie cylindrique comporte au moins dans certaines zones l'élément de filtre amont.

3. Filtre à air selon la revendication 2,
**caractérisé par**
un intervalle annulaire (6) entre l'élément de filtre principal (4) et l'élément de filtre amont (5).

4. Filtre à air selon l'une des revendications précédentes,
**caractérisé en ce que**
l'agent adhésif est du latex avec un agent épaississeur.

5. Filtre à air selon l'une des revendications précédentes,
**caractérisé en ce que**
l'agent adhésif est une composition d'élastomère formée d'un chlorure de polyvinyle à poids moléculaire élevé et d'un polyester constituant le plastifiant.

6. Filtre à air selon l'une des revendications précédentes,
**caractérisé en ce que**
l'agent adhésif est une combinaison de résine époxy avec une amine ou une hydroamine, un dithol ou un durcisseur latent.

7. Filtre à air selon l'une des revendications précédentes,
**caractérisé en ce que**
l'adhésif est une combinaison de résine époxy et d'une amine ou d'une combinaison imidazol et d'anhydride d'acide polycarboxylique.
